# Europäisches Patentamt
# European Patent Office
# Office européen des brevets

(19)

(11) Numéro de publication: **0 084 492**
**B1**

(12)

# FASCICULE DE BREVET EUROPEEN

(45) Date de publication du fascicule du brevet:
**14.08.85**

(51) Int. Cl.⁴: **F 23 C 11/02,** B 01 J 8/44

(21) Numéro de dépôt: **83400086.1**

(22) Date de dépôt: **13.01.83**

(54) **Foyer et procédé de traitement en lit fluidisé d'un combustible en particules solides.**

(30) Priorité: **20.01.82 FR 8200815**

(43) Date de publication de la demande:
**27.07.83 Bulletin 83/30**

(45) Mention de la délivrance du brevet:
**14.08.85 Bulletin 85/33**

(84) Etats contractants désignés:
**AT BE CH DE GB IT LI LU NL SE**

(56) Documents cités:
**FR - A - 1 422 198**
**GB - A - 858 813**

**CHEMICAL ABSTRACTS, vol. 94, no. 20, Mai 1981, page 113, no. 158799t, Columbus, Ohio, USA**

(73) Titulaire: **Etablissement public dit: CHARBONNAGES DE FRANCE, 9, Avenue Percier, F-75008 Paris (FR)**

(72) Inventeur: **Delessard, Serge L. J. E., 4 Résidence du Clos d'Orléans, F-94120 Fontenay Sous Bois Val de Marne (FR)**
Inventeur: **Puff, Marcel Roger, 35, rue Ronsard, F-57800 Freyming-Merlebach Moselle (FR)**
Inventeur: **Kita, Jean-Claude, 204 B, rue Nationale, F-57600 Forbach Moselle (FR)**
Inventeur: **Virgilio, Ange, 4, Impasse de l'Autoroute Cocheren, F-57800 Freyming-Merlebach Moselle (FR)**

(74) Mandataire: **Chevallier, Robert Marie Georges, Cabinet BOETTCHER 23, rue La Boétie, F-75008 Paris (FR)**

## Description

L'invention a pour objet un foyer et un procédé de traitement d'un combustible en particules solides qui est tenu en lit fluidisé, pendant le traitement, à l'intérieur d'une chambre de traitement limitée à sa partie basse par une grille. Cette grille présente un ensemble de canaux de passage de gaz par où arrive un gaz de fluidisation, de traitement et éventuellement d'entraînement des particules de combustible à traiter.

On entend ici par traitement toute opération que l'on peut faire subir au combustible en grains tenu à l'état fluidisé. Comme exemples de traitement, on peut citer la gazéification, la combustion, etc.

L'invention se rapporte plus spécialement à un foyer de traitement qui comprend un moyen supérieur d'alimentation en combustible ainsi qu'un moyen, disposé également au-dessus du niveau de la grille, servant à l'évacuation du combustible traité ou à celle de déchets ou de sous-produits éventuels. Ainsi dans un foyer concerné par l'invention, il existe au-dessus de la grille des moyens d'arrivée et d'évacuation du combustible et la grille sert exclusivement au passage de canaux d'arrivée du gaz de fluidisation et de traitement.

Le procédé de l'invention se rapporte au mode d'alimentation du foyer à travers la grille en gaz de fluidisation et de traitement.

Dans l'état de la technique, on connaît les brevets français N<sup>os</sup> FR-A-1422198 et FR-A-2171945 où sont décrites des grilles de fluidisation comportant des ouvertures constituées par des cavités évasées vers le haut, juxtaposées. De telles grilles permettent de régler et d'assurer un débit régulier des gaz dans toute l'étendue de la zone fluidisée.

On connaît aussi le brevet japonais N° JP-A-80.99334 qui concerne un apparail à lit fluidisé dans lequel une grille de fluidisation présente des cavités évasées vers le haut; à cette grille aboutissent une première canalisation d'arrivée de gaz de fluidisation et un second ensemble de canalisations espacées qui servent à l'alimentation de la grille en matériau à fluidiser. Dans ce brevet, il n'existe donc qu'un seul circuit de gaz de fluidisation.

Le document GB-A-858813 décrit un foyer de combustion à lit fluidisé dans lequel de l'air de fluidisation est soufflé à travers une grille et un circuit distinct souffle de l'air secondaire par des buses situées à diverses hauteurs au-dessus du lit fluidisé. Cet air secondaire ne participe donc nullement à la fluidisation du combustible.

On connaît encore les demandes publiées de brevet européen EP-A-0050518 et EP-A-0050519 dans lesquelles on trouve une grille tronconique perforée terminée vers le bas par un conduit vertical d'évacuation; cette grille est traversée par des tubes verticaux dont certains servent de brûleurs d'allumage. De l'air est envoyé à travers la grille soit par les perforations de celle-ci, soit par certains des tubes verticaux, mais cet air provient d'un seul circuit d'alimentation en air.

L'un des emplois importants — mais non le seul — du foyer de l'invention étant la combustion du combustible en grains, on rappellera, en outre, qu'il a déjà été proposé d'utiliser des lits fluidisés comme foyers de combustion. Leur principal avantage réside dans la possibilité de brûler des combustibles particulaires divers à très forte teneur en résidus non combustibles. Par contre, leur souplesse de fonctionnement est limitée.

En effet, dans un foyer à lit fluidisé, on observe, à excès d'air constant, que la quantité de chaleur produite est pratiquement proportionnelle à la vitesse des gaz traversant le lit fluidisé. Dans une chambre équipée d'une grille de fluidisation travaillant à une vitesse nominale des gaz de 2,5 m/s, on peut espérer réduire la capacité de traitement, donc la productivité, dans un rapport de 1 à 2 (au maximum de 1 à 3). En revanche, pour cette même chambre, il est difficilement envisageable de doubler ou tripler la productivité nominale, en augmentant le débit d'air de fluidisation sans créer une forte vitesse de passage de l'air au travers de la grille et provoquer de la sorte une perte de charge excessive (la perte de charge étant proportionnelle au carré de la vitesse des gaz). Il en résulterait des problèmes:

— de tenue des matériaux, par accroissement de l'abrasion,

— d'étanchéité de la grille à haute température sous forte pression et risque de déformation de cette grille,

— de comportement irrégulier du lit fluidisé,

— de puissance des appareils de soufflage d'air.

Les procédés de fluidisation et/ou d'entraînement développés actuellement permettent de travailler dans deux domaines bien distincts quand on veut traiter une matière en particules:

— lits fluidisés denses avec vitesse des gaz de 1 à 3 m/s,

— lits fluidisés entraînés avec vitesse des gaz de 6 à 8 m/s (vitesses à vide, également dites de fluidisation).

Il n'existe pas actuellement de procédé de fluidisation permettant de passer simplement d'un domaine de fluidisation à l'autre à l'intérieur d'un même appareil.

Les installations industrielles envisagées jusqu'à présent doivent en conséquence présenter une conception à base d'unités répétitives avec comme corollaire les inconvénients suivants:

— multiplication des réacteurs et de leurs annexes,

— procédure contraignante de mise en route et d'arrêt de chaque unité,

— variation de puissance discontinue.

Le but principal de l'invention est de proposer un foyer à chambre et à grille de fluidisation permettant de s'affranchir des inconvénients ci-dessus, possédant une grande souplesse de fonctionnement et permettant notamment de passer aisément, de façon continue, réversible et rapide, du domaine des lits fluidisés denses au domaine des lits fluidisés entraînés.

Un but secondaire de l'invention est de proposer des foyers du type ci-dessus adaptés à la combustion et ayant donc une très grande souplesse de fonctionnement.

Ces buts sont atteints au moyen d'un foyer dans lequel la grille est alimentée en gaz de fluidisation et de traitement par la combinaison d'un premier circuit et d'un second circuit ayant chacun leur source propre d'alimentation, en gaz.

De cette façon, on peut obtenir pratiquement à travers une grille unique tous les régimes intermédiaires entre celui de fluidisation avec une vitesse de gaz de 1 à 3 m/s en n'alimentant en fluide gazeux que le premier circuit comprenant les cavités évasées vers le haut et celui d'entraînement avec une vitesse de gaz de 6 à 8 m/s en alimentant simultanément en fluide gazeux les deux circuits.

Il est préférable d'employer une grille telle que décrite dans les brevets français cités plus haut présentant des cavités juxtaposées et évasées vers le haut.

Dans ce cas, le premier circuit de gaz de fluidisation et de traitement est raccordé à un ensemble de canaux à sens de soufflage vertical s'ouvrant dans le fond de cavités juxtaposées et évasées vers le haut se terminant par une ouverture supérieure, ménagée dans la grille, tandis que le second circuit est raccordé à des canaux traversant la grille dans les intervalles qui séparent les cavités et s'ouvrant au-dessus du niveau de cette grille. De cette façon on ne perturbe pas la bonne répartition du fluide gazeux en régime de fluidisation puisqu'on préserve ainsi la totalité de la section efficace de la partie supérieure des cavités évasées vers le haut qui servent à créer et à établir le régime de fluidisation.

Il est avantageux que les canaux raccordés au second circuit soient des conduites débouchant sensiblement au-dessus du niveau supérieur des cavités évasées. De cette façon, on maintient en dessous du débouché de ces conduites une zone qui, en cas de pulsage du fluide gazeux par ces canaux, reste soumise au régime de fluidisation par le fluide gazeux pulsé par les cavités évasées du premier circuit, un tel régime de fluidisation favorisant l'homogénéisation du mélange particules-fluide gazeux.

Il est conforme à l'invention que la section totale des canaux du second circuit soit au moins égale à la section totale de passage de gaz des canaux du premier circuit. De cette façon on peut assurer des vitesses d'entraînement de plusieurs fois supérieures à la vitesse de fluidisation, dans la pratique au moins deux à trois fois supérieures.

Il est également conforme à l'invention que la section totale de l'ouverture supérieure des cavités évasées vers le haut soit au moins égale à la section totale des canaux du second circuit. De cette façon on assure la meilleure répartition possible du fluide gazeux de fluidisation sur la plus grande section de la chambre.

De préférence, selon l'invention les canaux du second circuit se terminent dans la chambre au-dessus de la grille par des orifices dirigés en sens transversal au sens de soufflage vertical des canaux du premier circuit, ou par des orifices ouverts vers le haut en dessous d'une coiffe qui évite l'introduction de particules pendant l'arrêt de pulsage de fluide gazeux par le second circuit.

Quand le foyer de l'invention est utilisé comme foyer de combustion à grille fixe inférieure, le gaz qui est soufflé par le premier et par le second circuit est de l'air de combustion qui assure aussi la fluidisation et/ou l'entraînement du combustible en grains. Ce combustible est introduit à la partie supérieure du foyer à l'aide de moyens appropriés et les cendres sont évacuées par des moyens appropriés qui sont disposés a un niveau supérieur à la grille.

Chaque ensemble d'ouvertures a un dispositif propre d'alimentation en air de combustion. De préférence, ces dispositifs d'alimentation en air de combustion sont commandables indépendamment l'un de l'autre.

Selon le procédé de l'invention, on effectue le traitement d'une matière particulaire dans un foyer conforme à l'invention en alimentant à volonté seulement le premier circuit ou les deux circuits de canaux.

De préférence, on alimente le premier circuit à un débit de fluide gazeux compris dans une fourchette qui correspond sensiblement au fonctionnement en régime de fluidisation de la matière contenue dans la chambre, c'est-à-dire assurant le plus souvent une vitesse du fluide gazeux comprise entre 1 et 3 m/s dans ladite chambre quand celle-ci est vide de matière particulaire.

On agit sur le second circuit en l'alimentant à un débit complémentaire de celui du premier circuit pour obtenir un débit total correspondant sensiblement au fonctionement en régime intermédiaire et/ou d'entraînement de la matière contenue dans la chambre, c'est-à-dire assurant le plus souvent une vitesse du fluide gazeux comprise entre 3 m/s et 8 m/s dans ladite chambre quand celle-ci est vide de matière particulaire.

On règle le débit complémentaire et/ou le débit total en fonction de la capacité de traitement réelle désirée.

D'autres caractéristiques ainsi que les avantages de l'invention ressortiront de la description, qui sera donnée ci-après uniquement à titre d'exemple, d'un mode préféré de réalisation. On se reportera à cet effet aux dessins annexés, dans lesquels:

— la fig. 1 est la vue en plan d'une grille fixe d'un foyer conforme à l'invention, cette grille présentant trente-sept pyramides d'introduction de fluide gazeux de fluidisation,

— la fig. 2 est une vue partielle agrandie en coupe selon II-II de la grille de la fig. 1,

— la fig. 3 est une vue en plan d'une variante de la grille d'un foyer de plus petite taille, cette grille présentant seulement trois pyramides d'introduction de fluide gazeux de fluidisation,

— la fig. 4 est une vue partielle agrandie en coupe selon IV-IV de la grille de la fig. 3,

— la fig. 5 est une vue en coupe par un plan vertical de l'ensemble d'un foyer de traitement conforme à l'invention adapté à son emploi comme foyer de combustion,

— la fig. 6 montre des graphiques de variation du débit de fines de charbon 0-10 mm, de la température et du débit d'air au cours d'essais réalisés avec le foyer de la fig. 5 muni d'une grille conforme aux fig. 1 et 2.

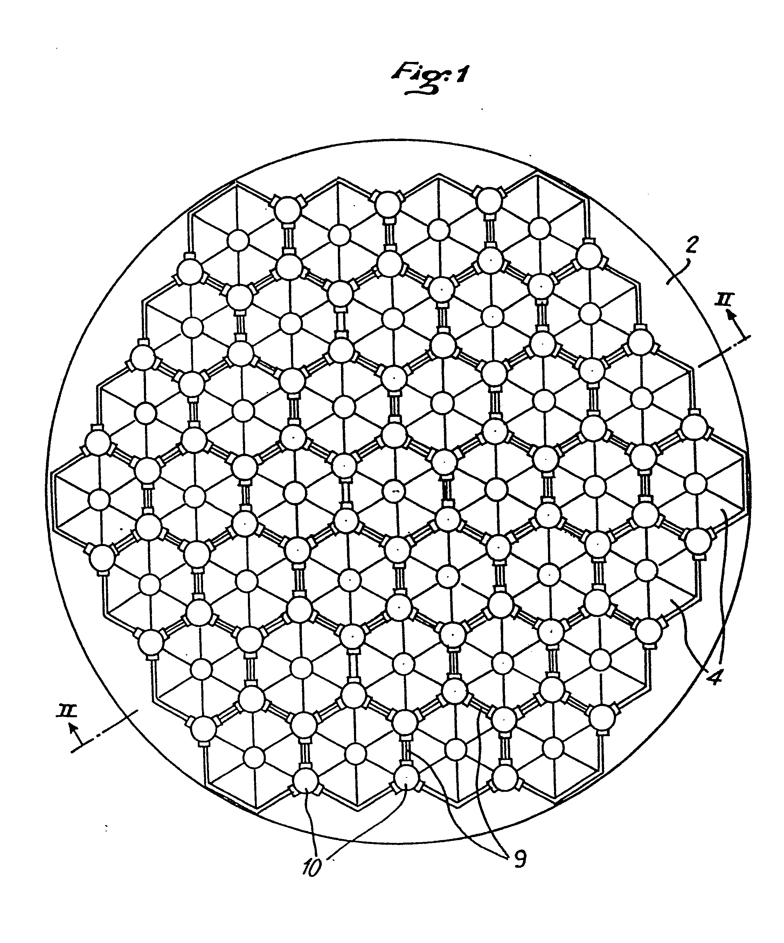

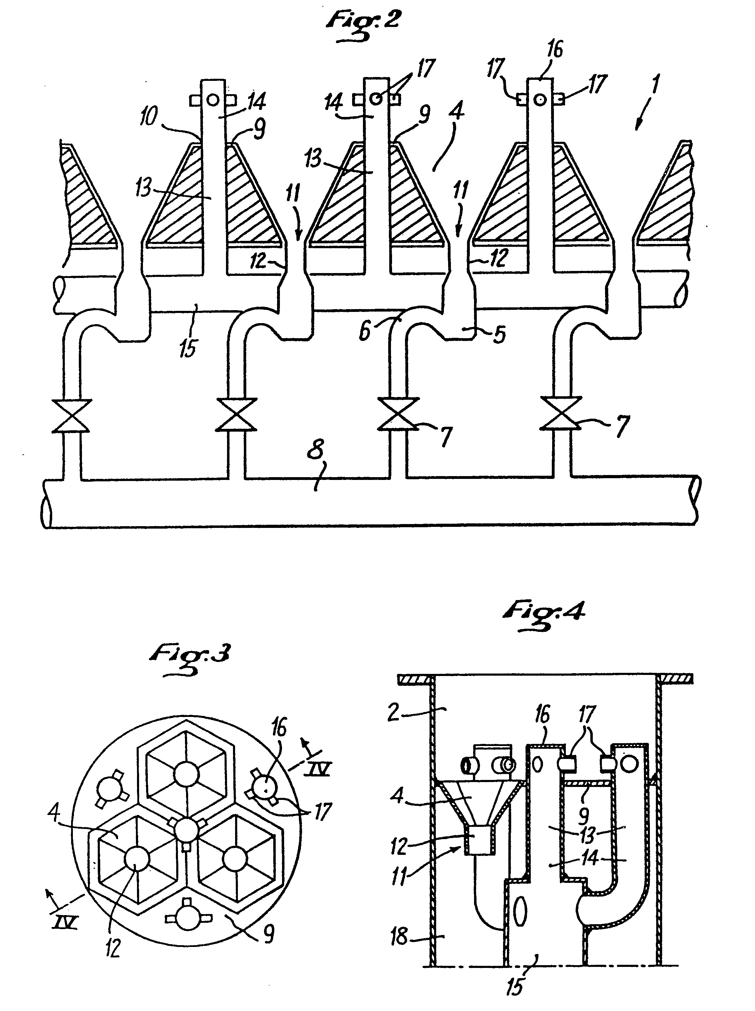

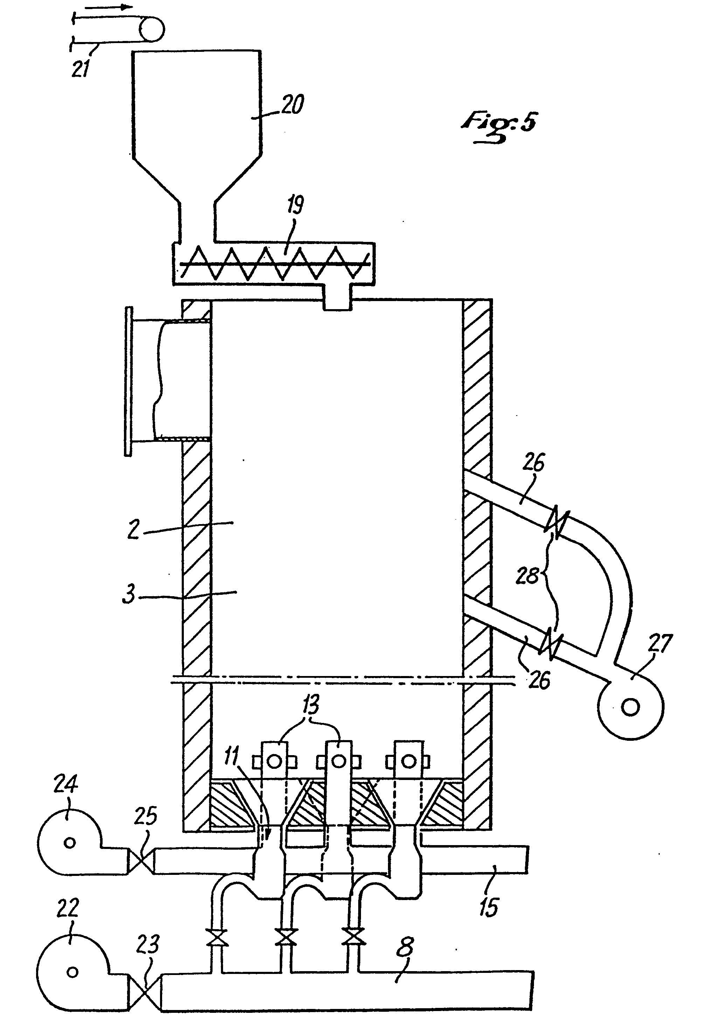

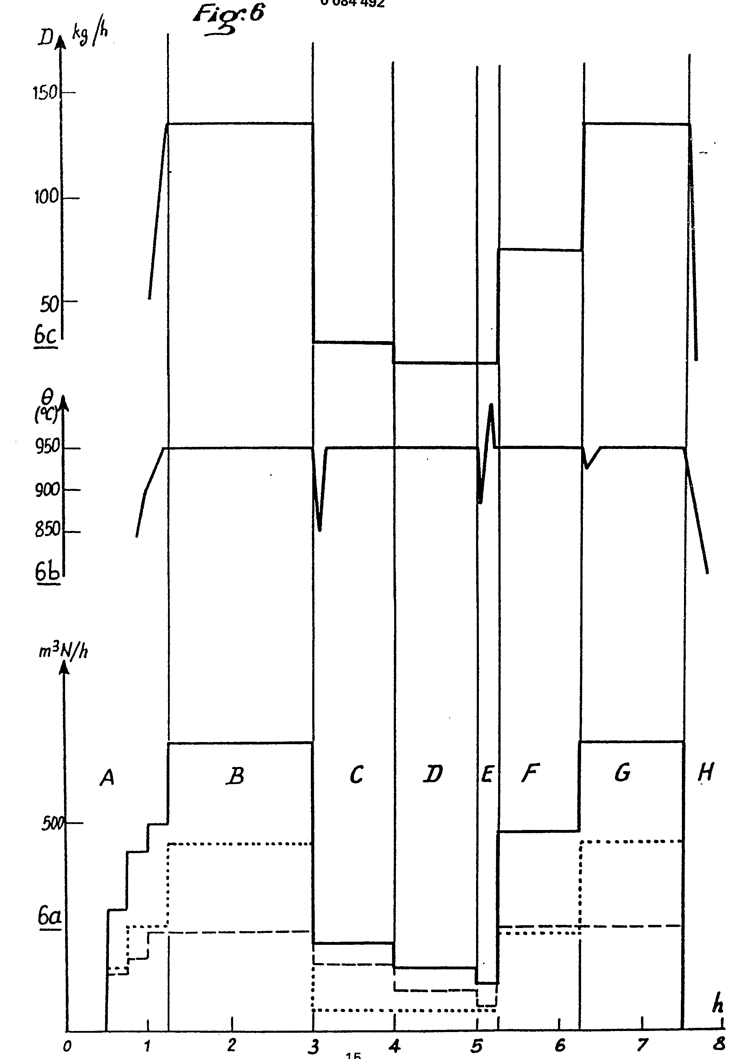

La grille 1 des fig. 1 et 2 est destinée à être installée à la partie basse d'une chambre de traitement 2, par exemple un foyer de combustion 3 comme celui de la fig. 5. Pour fixer les idées, on se reportera, en effet, à l'exemple d'un foyer de combustion dans lequel le gaz envoyé dans le premier circuit et dans le second circuit est de l'air. Dans un autre emploi du foyer de traitement de l'invention, le fluide gazeux pourrait être de la vapeur d'eau, de l'air enrichi en oxygène, de l'oxygène pur, ou un gaz neutre contenant de l'oxygène, par exemple pour l'exécution d'opérations de gazéification.

La grille 1 comporte, aux fig. 1 et 2, trente-sept cavités tronconiques ou pyramidales 4 et, aux fig. 3 et 4, trois cavités pyramidales 4, à évasement tourné vers le haut, se terminant chacune par une ouverture supérieure. Chacune des cavités 4 est le débouché supérieur d'un canal 11 relié à sa base 12 à un pot 5 à siphon 6 raccordé à une vanne de réglage 7, et toutes sont ainsi reliées, chacune à travers la vanne 7, le siphon 6 et le pot 5, à une conduite de distribution principale 8 de fluide gazeux reliée à un ventilateur de pulsage non représenté aux fig. 1 à 4.

Les cavités tronconiques ou pyramidales 4 sont juxtaposées et laissent apparaître sur la partie supérieure de la grille 1 des nervures 9 plus ou moins larges. Ces nervures se rencontrent à des points triples de jonction 10, où, selon l'invention, la grille est traversée verticalement, par des conduites 13 constituant canaux complémentaires 14, la base desdites conduites 13 étant raccordée à une conduite de distribution secondaire 15 de fluide gazeux reliée à un ventilateur de pulsage non représenté aux fig. 1 à 4. Les conduites 13 sont tubulaires, de section sensiblement constante, et débouchent au-dessus du plan supérieur des cavités pyramidales 4 évasées vers le haut. Leur partie supérieure 16 est obturée ou coiffée, mais elles débouchent dans la chambre 2 par des ouvertures latérales 17 de section totale chaque fois au plus égale à la section de la partie ascendante. La section totale des conduites 13 est au moins égale à la section totale des bases 12 des canaux 11, tandis que la section totale des ouvertures supérieures des cavités 4 tronconiques ou pyramidales est de plusieurs fois supérieure à la section totale des conduites 13.

Aux fig. 3 et 4, on a représenté une variante à trois canaux 11 à cavités pyramidales 4 et à quatre conduites tubulaires 13 raccordées à une conduite 15. A part le nombre de canaux occupant la surface de cette grille 1 des fig. 3 et 4, la seule autre différence notable est l'absence de siphons 6 et de vannes 7, la base 12 des canaux 11 étant alors raccordée à une unique boîte à vent 18.

Il existe alors un premier circuit 22, 23, 8 et un second circuit 24, 25, 15 qui sont distincts et qui ont chacun leur source propre 22, 24 d'alimentation en gaz.

Dans un foyer conforme à l'invention, quand la grille est alimentée seulement par les canaux 11 à ouverture évasée du premier circuit 22, 23, 8, toute la matière prticulaire peut être mise en régime de fluidisation, par le soufflage, de façon connue en soi, à une vitesse ascendante à 1 à 3 m/s de fluide gazeux dans la chambre 2; ainsi on réduit considérablement les zones mortes nuisibles à une bonne exploitation, surtout quand il existe un risque d'agglutination de la matière particulaire. On voit également que, quand la grille est alimentée à la fois par les deux ensembles de canaux 11 et 14 des deux circuits, on peut créer dans le foyer un régime d'entraînement de la matière particulaire au-dessus du niveau des orifices supérieurs des canaux 14.

La fig. 5 montre l'utilisation d'un foyer de traitement selon l'invention comme foyer à combustible solide pulvérisé ou boueux. Le combustible en grains arrive par un moyen supérieur d'alimentation qui comprend un alimenteur 19 à vis installé en dessous d'une trémie 20 qui est elle-même approvisionnée par un transporteur 21. Le combustible tombe par gravité dans la chambre de traitement 2. Des moyens (non représentés) sont installés au-dessus du niveau de la grille pour évacuer les imbrûlés.

La grille se trouve à la base de la chambre de traitement 2 qui sert alors de foyer de combustion 3, dans lequel tombe le charbon en grains ou tout autre combustible pulvérulent ou boueux venant de l'alimenteur 19. Les canaux 11 du premier circuit sont alimentés par la conduite 8 en air primaire de combustion et de fluidisation grâce à un ventilateur 22 réglable en débit directement et/ou par une éventuelle vanne de réglage 23. La conduite 15 desservant les conduites tubulaires 13 du second circuit est alimentée séparément en air primaire de combustion et d'entraînement par un ventilateur 24 réglable en débit directement et/ou par une éventuelle vanne de réglage 25. Dans le cas de l'emploi comme foyer de combustion, il existe des tuyères 26 d'injection d'air secondaire dans le foyer 3; ces tuyères sont alimentées par un ventilateur 27 et des vannes de réglage 28.

Le foyer représenté à la fig. 5 a été utilisé pour la combustion d'un lignite de Gardanne ayant les caractéristiques suivantes:

Granulométrie: 85% < 10 mm; 50% < 3,15 mm; 17% < 1 mm; 8,5% < 0,5 mm.

Humidité: 14%; cendres: 35%; matières volatiles: 37,9%; pouvoir calorifique inférieur: 4130 kcal/kg.

On a réalisé cinq essais correspondant à des conditions de fonctionnement indiquées dans le tableau ci-après.

*(Tableau en page suivante)*

(1) Un minimum technique de l'ordre de 10 à 30 m³/h prélevé sur l'air total est introduit dans les canaux tubulaires pour les protéger d'un échauffement dommageable et accessoirement pour y éviter l'entrée de particules solides. Le reste, c'est-à-dire la presque totalité de l'air, est alors envoyé dans les canaux pyramidaux.

Au cours de ces essais, la vitesse à vide des fumées de combustion a été successivement fixée à:
— 1,3; 1,8 et 4,2 m/s avec le minimum technique

| Essai | 1 | 2 | 3 | 4 | 5 |
|---|---|---|---|---|---|
| *Température* °C<br>lit | 950 | 950 | 950 | 950 | 950 |
| *Pression* (mm CE)<br>   dessous grille<br>$\Delta$ p grille<br>$\Delta$ p lit | 900<br>240<br>460 | 700<br>220<br>445 | 1285<br>270<br>355 | 990<br>270<br>420 | 1505<br>805<br>415 |
| *Débit air* (m³N/h)<br>— total<br>— canaux pyramidaux<br>— canaux tubulaires<br>   (air complémentaire) | 200<br>(1)<br>(1) | 150<br>(1)<br>(1) | 690<br>240<br>450 | 470<br>240<br>230 | 470<br>(1)<br>(1) |
| *Débit lignite sur sec* (kg/h) | 30 | 15 | 135 | 75 | 77 |
| *Vitesse de fluidisation* (m/s) | 1,8 | 1,3 | 6,1 | 4,2 | 4,2 |

d'air complémentaire dans les canaux tubulaires 14;

— 4,2 et 6,1 m/s avec l'air des pyramides assurant une vitesse de fluidisation d'environ 2 m/s; l'air des canaux tubulaires 14 asssurant le complément.

Les résultats des essais ont montré que l'introduction d'air complémentaire par les canaux tubulaires 14 permet de maintenir une perte de charge de grille ($\Delta$ p grille) constante quelle que soit la vitesse de fluidisation.

Ils ont également montré que le débit de lignite traité a pu varier de 15 kg/h à 135 kg/h, ce qui n'aurait pu être réalisé avec une installation de fluidisation classique. Par ailleurs on a constaté que le degré de combustion du lignite (100 - pertes par imbrûlés en %) qui diminue quand la vitesse de fluidisation augmente reste quand même satisfaisant (supérieur à 94%) pour des vitesses de fluidisation atteignant 6,1 m/s.

Au cours d'une autre série d'essais, des modifications rapides d'allure de marche du foyer ont été réalisées en faisant varier la vitesse à vide des fumées entre 1 m/s et 6 m/s, tout en maintenant constants température de combustion (950°C), perte de charge du lit ($\simeq$ 400 mm CE) et rapport charbon/air total.

Les résultats de ces essais sont consignés sur les diagrammes de la fig. 6 qu'il convient de considérer comme faisant partie de la présente description pour leur valeur informative. La fig. 6 représente trois graphiques, ayant une échelle commune d'abscisses en heures. Le graphique inférieur représente en ordonnées en trait continu le débit instantané d'air primaire total exprimé en m³N/h, en trait interrompu le débit instantané de la fraction (de fluidisation) de cet air introduit par les canaux pyramidaux et en trait pointillé le débit instantané d'air complémentaire introduit par les canaux tubulaires 14. Le graphique du milieu représente la température θ mesurée dans le lit, exprimée en °C. Le graphique supérieur représente le débit instantané D de lignite introduit dans le foyer (en kg/h).

On distingue sur ces graphiques huit périodes successives s'échelonnant sur un total de 8 h. Ces périodes, qui correspondent chacune à un régime de fonctionnement imposé, sont séparées sur les graphiques par des traits verticaux correspondant aux instants de changement de régime.

La période A correspond à la mise en route de l'installation.

La période B correspond à une marche en régime d'entraînement à 6,1 m/s avec un débit de lignite de 131 kg/h.

La période C correspond à une marche en régime de fluidisation à 1,8 m/s avec un débit de lignite de 34 kg/h.

La période D correspond à une marche en régime de fluidisation à la faible allure de 1,3 m/s avec un débit de lignite de 16 kg/h.

La période E correspond à une marche à vitesse limite de 1 m/s ayant conduit à un régime instable.

La période F correspond à une marche en régime intermédiaire de 4,2 m/s avec un débit de lignite d'environ 77 kg/h.

La période G correspond à une nouvelle marche à fort régime comme à la période B.

La période H correspond à l'arrêt des essais.

Après chaque variation d'allure, l'installation se retrouvait rapidement en équilibre, en général après une phase transitoire de l'ordre de 15 min liée aux réglages manuels de l'installation, sauf pour ce qui concerne la marche à 1 m/s au cours de laquelle un fonctionnement instable a été observé.

Par conséquent, les essais effectués ont permis:

— d'assurer une fluidisation correcte avec des vitesses de fluidisation variant de 1,3 à 6,1 m/s;

— d'accroître la productivité du foyer de façon importante sans entraîner d'augmentation de la perte de charge de grille, donc sans nécessiter une très forte pression de refoulement des ventilateurs de soufflage, ni des vitesses de gaz trop importantes au niveau de la grille;

— de brûler le lignite de Gardanne de façon satisfaisante, même avec une vitesse de fluidisation de 6 m/s;

— de maintenir une perte de charge de lit stable dans la plage de vitesse expérimentée.

Il va de soi que la grille de l'invention peut être de même appliquée à la combustion de tous types de combustibles et notamment de combustibles pauvres ou à fortes teneurs en impuretés tels que par exemple schistes houillers ou bitumineux, résidus pétroliers, ordures ménagères et déchets divers.

Elle s'applique également à tous types de traitements en lit fluidisé dans lesquels il est souhaitable de faire varier la productivité de l'installation et le débit des matières traitées dans de larges limites.

On peut aussi introduire des fumées recyclées, de la vapeur d'eau ou du charbon pulvérisé ou des cendres en transport pneumatique par les conduites de gaz conmplémentaire.

On ne sortira pas du cadre de l'invention en y apportant toutes modifications de détail. C'est ainsi qu'au lieu de disposer des conduites constituant les canaux complémentaires du second circuit à tous les points triples de jonction (fig. 1), on pourra se contenter d'en disposer à un certain nombre seulement de ces points. De même, on pourra ne pas prévoir d'ouvertures latérales au sommet des conduites verticales, si on les laisse ouvertes en haut et si on les munit de coiffes, comme il est connu en soi.

## Revendications

1. Foyer de traitement en lit fluidisé d'un combustible en particules solides, comprenant un moyen supérieur (20-19) d'alimentation dudit foyer, une grille inférieure fixe (1) de soufflage de gaz de fluidisation et de traitement ayant des canaux de passage de gaz, un moyen d'évacuation du combustible traité disposé au-dessus de la grille, caractérisé en ce que le gaz de fluidisation et de traitement est fourni au niveau de la grille (1) par la combinaison d'un premier circuit (22, 23, 8) et d'un second circuit (24, 25, 15) distincts ayant chacun leur source propre (22, 24) d'alimentation en gaz.

2. Foyer selon la revendication 1, caractérisé en ce que le premier circuit (22, 23, 8) de gaz de fluidisation et de traitement est raccordé à un ensemble de canaux (11) à sens de soufflage vertical s'ouvrant dans le fond de cavités (4) juxtaposées et évasées vers le haut se terminant par une ouverture supérieure, ménagées dans la grille (1), tandis que le second circuit (24, 25, 15) est raccordé à des canaux (13) traversant la grille (1) dans les intervalles qui séparent les cavités (4) et s'ouvrant au-dessus du niveau de cette grille (1).

3. Foyer selon la revendication 2, caractérisé en ce que les canaux (13) du second circuit (24, 25, 15) se terminent au-dessus de la grille (1) par des orifices (17) dirigés en sens transversal au sens de soufflage vertical des canaux (13) du premier circuit.

4. Foyer selon la revendication 2, caractérisé en ce que les canaux (13) du second circuit (24, 25, 15) se terminent au-dessus de la grille (1) par des orifices ouverts vers le haut en dessous d'une coiffe.

5. Foyer selon la revendication 2, caractérisé en ce que la section totale de passage de gaz des canaux (13) du second circuit est au moins égale à la section totale de passage de gaz des canaux (11) du premier circuit.

6. Foyer selon la revendication 2, caractérisé en ce que la section totale des ouvertures supérieures des cavités (4) est au moins égale à la section totale des canaux (13) du second circuit.

7. Foyer selon la revendication 2 utilisé pour la combustion du combustible, caractérisé en ce que le premier et le second circuit sont alimentés tous deux en gaz de fluidisation et de combustion contenant de l'oxygène.

8. Procédé de traitement d'un combustible en grains par exploitation du foyer selon l'une quelconque des revendications 1 à 7, caractérisé en ce qu'on alimente le premier circuit (22, 23, 8) à un débit de gaz compris dans une fourchette qui correspond sensiblement au régime de fluidisation du combustible à l'intérieur de ce foyer.

9. Procédé de traitement selon la revendication 8, caractérisé en ce qu'on alimente le second circuit (24, 25, 15) à un débit de gaz complémentaire au débit de gaz du premier circuit afin d'obtenir un débit total qui correspond sensiblement au fonctionnement du foyer en régime d'entraînement ou au moins à un régime intermédiaire entre la fluidisation et l'entraînement.

10. Procédé de traitement selon la revendication 8, caractérisé en ce qu'on règle le débit du second circuit et/ou le débit total des deux circuits en fonction de la capacité effective désirée du foyer.

## Patentansprüche

1. Ofen zur Behandlung von festen Brennstoffpartikeln in einem Wirbelbett, mit einer obenliegenden Einrichtung (20-19) zur Beschickung des Ofens, mit einem untenliegenden, festen Rost (1) zum Einblasen des Fluidisierungs- und Behandlungsgases, wobei der Rost Gasdurchlasskanäle aufweist, und mit einer unterhalb des Rostes angeordneten Einrichtung zum Austragen des behandelten Brennstoffes, dadurch gekennzeichnet, dass das Fluidisierungs- und Behandlungsgas in Höhe des Rostes (1) durch eine Kombination aus einem ersten Leitungskreis (22, 23, 8) und einem zweiten, getrennten Leitungskreis (24, 25, 15) geliefert wird, und dass jeder der Leitungskreise eine eigene Gasversorgungsquelle (22, 24) aufweist.

2. Ofen nach Anspruch 1, dadurch gekennzeichnet, dass der erste Leitungskreis (22, 23, 8) für das Fluidisierungs- und Behandlungsgas verbunden ist mit einem Satz von Kanälen (11) mit vertikaler Blasrichtung, welche sich am Boden von Austiefungen oder Hohlräumen (4) öffnen, welche nebeneinander liegen und sich nach oben hin konisch erweitern und in oberen Öffnungen enden, welche im Rost (1) angeordnet sind, während der zweite Leitungskreis (24, 25, 15) mit Kanälen (13) verbunden ist, welche den Rost (1) in den Bereichen kreuzen, welche die Austiefungen (4) trennen, und welche sich oberhalb der Oberfläche des Rostes (1) öffnen.

3. Ofen nach Anspruch 2, dadurch gekennzeichnet, dass die Kanäle (13) des zweiten Leitungskreises (24, 25, 15) oberhalb des Rostes (1) in Öffnungen (17) enden, welche quer zur vertikalen Blasrichtung der Kanäle (13) des ersten Leitungskreises gerichtet sind.

4. Ofen nach Anspruch 2, dadurch gekennzeichnet, dass die Kanäle (13) des zweiten Leitungskreises (24, 25, 15) oberhalb des Rostes (1) in Öffnungen enden, welche nach oben hin unterhalb eines Deckbleches geöffnet sind.

5. Ofen nach Anspruch 2, dadurch gekennzeichnet, dass der Gesamtquerschnitt des Gasdurchganges der Kanäle (13) des zweiten Leitungskreises mindestens gleich ist dem Gesamtquerschnitt des Gasdurchganges der Kanäle (11) des ersten Leitungskreises.

6. Ofen nach Anspruch 2, dadurch gekennzeichnet, dass der Gesamtquerschnitt der oberen Öffnungen der Austiefungen (4) mindestens gleich ist dem Gesamtquerschnitt der Kanäle (13) des zweiten Leitungskreises.

7. Ofen nach Anspruch 2, verwendet zur Verbrennung von Brennstoffen, dadurch gekennzeichnet, dass sowohl der erste als auch der zweite Leitungskreis mit einem Fluidisierungs- und Verbrennungsgas beschickt werden, welches Sauerstoff enthält.

8. Verfahren zur Behandlung von festen Brennstoffpartikeln unter Verwendung eines Ofens nach irgendeinem der Ansprüche 1 bis 7, dadurch gekennzeichnet, dass man den ersten Leitungskreis (22, 23, 8) mit einer Gasdurchsatzmenge beschickt, welche in einem Bereich enthalten ist, welcher etwa dem Fluidisierungszustand des Brennstoffs im Inneren des Ofens entspricht.

9. Verfahren nach Anspruch 8, dadurch gekennzeichnet, dass man den zweiten Leitungskreis (24, 25, 15) mit einer Gasmenge beschickt, welche komplementär ist der Gasmenge des ersten Leitungskreises, um eine Gesamtmenge zu erhalten, welche etwa dem Betriebszustand des Ofens im Mitnahmezustand oder wenigstens einem Zwischenzustand zwischen der Fluidisierung und der Mitnahme entspricht.

10. Verfahren nach Anspruch 8, dadurch gekennzeichnet, dass man die Durchsatzmenge des zweiten Leitungskreises und/oder die Gesamtmenge beider Leitungskreise als Funktion der gewünschten wirksamen Leistung des Ofens regelt.

**Claims**

1. A hearth for the fluidised-bed treatment of a solid particulate fuel, comprising an upper means (20-19) of feeding the said hearth, a lower, fixed grid (1) for the flow of fluidisation and treatment gas, the grid having channels for gas flow, and means for removing treated fuel located above the grid, characterised in that the fluidisation and treatment gas is provided, at the level of the grid (1), by the combination of a first circuit (22, 23, 8) and a second circuit (24, 25, 15), the circuits being separate and each having their own gas supply source (22, 24).

2. A hearth according to Claim 1, characterised in that the first circuit (22, 23, 8) of fluidisation and treatment gas is connected to a set of channels (11) having vertical blowing direction, which channels open into the bottom of juxtaposed and upwardly flared cavities (4) which terminate in an upper orifice in the grid (1), while the second circuit (24, 25, 15) is connected to channels passing through the grid (1) in the gaps which separate the cavities (4) and open above the level of the grid (1).

3. A hearth according to Claim 2, characterised in that the channels (13) of the second circuit (24, 25, 15) terminate above the grid (1) in orifices (17) which are directed transversely to the vertical blowing direction of the channels (13) of the first circuit.

4. A hearth according to Claim 2, characterised in that the channels (13) of the second circuit (24, 25, 15) terminate above the grid (1) in orifices which open upwardly below a cover.

5. A hearth according to Claim 2, characterised in that the total gas flow cross-section of the gas flow channels (13) of the second circuit is at least equal to the total gas flow cross-section of the channels (11) of the first circuit.

6. A hearth according to Claim 2, characterised in that the total cross-section of the upper orifices of the cavities (4) is at least equal to the total cross-section of the channels (13) of the second circuit.

7. A hearth according to Claim 2, used for fuel combustion, characterised in that the first and the second circuits are both supplied with fluidisation and combustion gas containing oxygen.

8. A process for treating a particulate fuel employing a hearth according to any one of Claims 1 to 7, characterised in that the first circuit (22, 23, 8) is supplied at a gas feed rate which is within the range essentially corresponding to the fuel fluidisation operation within this hearth.

9. A process of treatment according to Claim 8, characterised in that the second circuit (24, 25, 15) is supplied at a gas feed rate which is complementary to the gas feed rate of the first circuit, so as to achieve a total feed rate which substantially corresponds to the functioning of the hearth in an entrainment operation or at least to an operation intermediate between fluidisation and entrainment.

10. A process of treatment according to Claim 8, characterised in that the feed rate of the second circuit and/or the total feed rate of the two circuits is regulated in accordance with the desired effective capacity of the hearth.

*Fig.1*

*Fig:2*

*Fig:3*

*Fig:4*

0 084 492

Fig. 5

13

Fig.6